# EUROPÄISCHE PATENTSCHRIFT

(11) **EP 2 898 596 B1**
(45) Veröffentlichungstag und Bekanntmachung des Hinweises auf die Patenterteilung: **16.11.2016**
(21) Anmeldenummer: 13742219.2
(22) Anmeldetag: 26.07.2013
(51) Int. Cl.: H02M 7/162, H02J 9/06

(54) **THERMODYNAMISCHE KREISPROZESSANLAGE**
THERMODYNAMIC CYCLICAL PROCESS ASSEMBLY
INSTALLATION DE CYCLAGE THERMODYNAMIQUE

(30) Priorität: 20.09.2012 DE 102012108869
(43) Veröffentlichungstag der Anmeldung: 29.07.2015
(73) Patentinhaber: EBM-Papst Mulfingen GmbH&CO. KG, 74673 Mulfingen (DE)
(72) Erfinder: SAUER, Thomas, 97980 Bad Mergentheim (DE); LIPP, Helmut, 74677 Dörzbach-Hohebach (DE)
(74) Vertreter: Peter, Julian
(86) Internationale Anmeldenummer: PCT/EP2013/065803
(87) Internationale Veröffentlichungsnummer: WO 2014/044452

(56) Entgegenhaltungen:
- WO-A1-2011/139269
- WO-A2-2004/109892
- JP-A- 2001 178 173
- US-A1- 2007 151 272
- US-A1- 2012 047 911
- US-B1- 6 317 012

## Beschreibung

Die vorliegende Erfindung bezieht sich auf eine thermodynamische Kreisprozessanlage umfassend mindestens zwei Wärmetauscher, einen EC-Kompressor und eine Kombination von elektronischen Komponenten wie EC-Ventilatoren, elektronische Reglerventile und/oder EC-Pumpen.

Derartige Anlagen werden zum Beispiel als Wärmepumpen bei Heizungsanlagen oder als Kältemaschinen bei Klimaanlagen eingesetzt. Dabei ist ein Wärmetauscher als ein Verflüssiger und der andere als ein Verdampfer ausgebildet. An den Wärmetauschern ist in der Regel ein Ventilator angebracht. Um den Wirkungsgrad des Gesamtsystems zu erhöhen, werden anstatt elektrischer und thermomechanischer Komponenten elektronisch gesteuerte Komponenten eingesetzt. So werden zum Beispiel EC (elektronisch kommutierte) -Ventilatoren anstatt AC-Ventilatoren und EC (elektronisch kommutierte) -Kompressoren (auch bürstenlose Gleichstrom-Kompressoren oder BLDC-Kompressoren genannt) anstatt AC-Kompressoren verwendet. Anstelle eines thermostatischen Expansionsventils wird ein elektronisches Reglerventil eingesetzt. Durch den Wechsel zu elektronischen Komponenten ist eine unabhängige Steuerung oder Regelung der einzelnen Komponenten von einem zentralen Regler möglich, so dass der Wirkungsgrad des Gesamtsystems in jedem Betriebspunkt maximiert werden kann. Dabei werden insbesondere der EC-Kompressor, die EC-Ventilatoren und die EC-Pumpe mit einer PWM (Pulsweitenmodulation) modulierten Betriebsspannung gesteuert beziehungsweise geregelt. Die PWM- Betriebsspannung für in diesen Anlagen benutzte EC-Kompressoren und EC-Ventilatoren liegen in der Regel zwischen 400 V bis 700 V Hub und 15 kHz bis 20 kHz PWM Frequenz.

Es sind thermodynamische Kreisprozessanlagen bekannt, bei denen die einzelnen elektronischen Komponenten jeweils eigene dezentrale elektronische Einheiten mit jeweils einer Versorgungselektronik zur Spannungsversorgung und einer Leistungselektronik mit einer Steuerungseinheit zur Steuerung oder Regelung der elektronischen Komponenten aufweisen. Die Leistungselektronik dient zur Erzeugung der PWM-Betriebsspannung. Die dezentralen elektronischen Einheiten der einzelnen elektronischen Komponenten werden unabhängig voneinander an die jeweils benötigte Spannungsquelle, zum Beispiel eine dreiphasige 400 V Drehstromquelle oder eine herkömmliche zweiphasige 230 V Wechselspannungsquelle, mittels ihrer Versorgungselektronik angeschlossen. Zur Steuerung bzw. Regelung des thermodynamischen Kreisprozesses umfasst die thermodynamische Kreisprozessanlage eine zusätzliche zentrale Reglereinheit, insbesondere mit einem zentralen Benutzerinterface. Die zentrale Reglereinheit ist mit den Steuerungseinheiten der einzelnen elektronischen Komponenten und mit zusätzlichen Sensoren verbunden. Die Sensoren stellen Betriebsparameter als Eingangssignale für die Reglereinheit zur Verfügung. Ein Nachteil dieser thermodynamischen Kreisprozessanlagen ist die hohe Redundanz der elektronischen Bauelemente in den einzelnen elektronischen Komponenten, insbesondere in der Versorgungselektronik und der Leistungselektronik. So weist in der Regel jede Versorgungselektronik einen EMV (Elektromagnetische Verträglichkeit)-Filter, eine Eingangsstrombegrenzung und einen AC/DC- und/oder einen DC/DC- Spannungswandler auf. Die Kosten dieser Bauelemente sind beachtlich, so dass solche thermodynamischen Kreisprozessanlagen relativ hohe Kosten verursachen.

Außerdem sind thermodynamische Kreisprozessanlagen bekannt, bei denen die einzelnen elektronischen Komponenten von einer zentralen elektronischen Einheit betrieben werden. Dazu sind die einzelnen elektronischen Komponenten ohne integrierte elektronische Einheiten ausgestattet. Stattdessen umfasst die zentrale elektronische Einheit die Versorgungselektronik für alle Komponenten, insbesondere mit einer Eingangsstrombegrenzung, einem EMV-Filter und mindestens einem Spannungswandler. Des Weiteren umfasst die zentrale elektronische Einheit mehrere Leistungselektroniken zur Erzeugung der verschiedenen PWM modulierten Spannungen für die einzelnen elektronischen Komponenten. Dazu sind die einzelnen insbesondere als Motoren ausgebildeten elektronischen Komponenten jeweils über separate Leitungen mit der zentralen elektronischen Einheit verbunden. Eine derartige thermodynamische Kreisprozessanlage hat den Vorteil, dass sie kostengünstig in großen Stückzahlen herstellbar ist, da elektronische Bauelemente eingespart werden können. Sie hat jedoch den Nachteil, dass die elektronische Einheit, insbesondere die Leistungselektroniken, speziell an die Leistungsbereiche der verwendeten elektronischen Komponenten angepasst werden müssen, so dass eine flexible Verwendung von alternativen elektronischen Komponenten mit anderen Leistungsbereichen nicht oder nur sehr begrenzt möglich ist. Außerdem entsteht durch die relativ langen Leitungen von der zentralen elektronischen Einheit zu den einzelnen elektronischen Komponenten unerwünschte elektromagnetische Strahlung, die insbesondere die zentrale elektronische Einheit oder die jeweils anderen elektronischen Komponenten negativ beeinflussen kann.

Derartige gattungsbildende Kreisprozessanlagen sind aus der US 2012/0047911 A1, der WO 2011/139269 A1, der US 2007/0151272 A1 und der WO 2004/109892 A2 bekannt.

Aus der JP 2001/178173 A ist ein Klimagerät mit einem bürstenlosen Gebläsemotor bekannt, wobei der Gebläsemotor bauintegriert einen Wechselrichter und einen monolithischen, integrierten Schaltkreis als Einzelbaustein aufweist, in dem eine Ein-Ausgabe-Steuerung integriert ist. Hierdurch kann die Ausgangsleistung des Klimagerätes durch die Steuerung der Eingangsgleichspannung des Motors zusammen mit der Puls-Weiten-Modulation-Steuerung des Wechselrichters angehoben werden.

Aus der US 6,317,012 B1 ist ein Medienwandlersystem zum Gebrauch in Datennetzwerken bekannt, mit dem eine Signalübertragung von einem Medium, beispielsweise verdrehte Kupferdrahtpaare, in ein anderes Medium, wie z. B. faseroptische Systeme, umgewandelt werden kann. Hierbei wird elektrische Leistung von Leistungsversorgungseinrichtungen an nachgeordnete Vorrichtungen verteilt.

Ausgehend vom gattungsbildenden Stand der Technik liegt der Erfindung daher die Aufgabe zugrunde, eine thermodynamische Kreisprozessanlage zu schaffen, die möglichst kostengünstig hergestellt werden kann, bei der gleichzeitig eine Flexibilität bei der Auswahl der einzelnen Komponenten mit unterschiedlichen Leistungsbereichen gewährleistet ist und bei der die elektromagnetische Strahlung möglichst gering ist. Insbesondere stellt sich die Aufgabe, die Spannungs-/ Stromregelungen für die jeweils benötigten Versorgungsspannungen/ -ströme der einzelnen Komponenten zu verbessern und elektromagnetische Interferenzen in den Zuleitungen zu vermeiden.

Bei einer thermodynamischen Kreisprozessanlage der eingangs beschriebenen Art wird die Aufgabe erfindungsgemäß durch die Merkmale des kennzeichnenden Teils des Anspruchs 1 gelöst.

Eine solche thermodynamische Kreisprozessanlage ermöglicht eine Einsparung von Bauelementen, da die Versorgungselektronik als zentrale elektronische Einheit ausgebildet ist. Hierdurch werden elektronische Bauelemente, insbesondere Eingangsstrombegrenzungen, EMV-Filter und Spannungswandler eingespart. Die Versorgungselektronik stellt die Versorgungsspannungen für die unterschiedlichen Komponenten zur Verfügung, deren Übertragung jedoch in Bezug auf elektromagnetische Strahlung unkritisch ist. Gleichzeitig ermöglicht die Integration der Leistungselektronik in der jeweiligen Komponente eine besonders kurze Verbindung zwischen Leistungselektronik und der elektronischen Komponente, so dass die durch die Übertragung der PWM-Betriebsspannung hervorgerufene elektromagnetische Strahlung minimiert wird. Des Weiteren ist eine flexible Anpassung der thermodynamischen Kreisprozessanlage an unterschiedliche Leistungsbereiche möglich, da die elektronischen Komponenten durch andere elektronische Komponenten mit anderen Leistungsbereichen ausgetauscht werden können, ohne die zentrale elektronische Einheit anpassen zu müssen.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigen:
- Fig. 1: ein Systemdiagramm einer ersten Ausführungsform einer erfindungsgemäßen thermodynamischen Kreisprozessanlage für eine dreiphasige Wechselspannungsquelle,
- Fig. 2: ein Systemdiagramm einer zweiten Ausführungsform einer erfindungsgemäßen thermodynamischen Kreisprozessanlage für eine einphasige Wechselspannungsquelle,
- Fig. 3: ein Schaltbild einer Ausführungsform einer zentralen Versorgungselektronik einer erfindungsgemäßen thermodynamischen Kreisprozessanlage und
- Fig. 4: ein Schaltbild einer Ausführungsform einer integrierten Leistungselektronik einer elektronischen Komponente einer erfindungsgemäßen thermodynamischen Kreisprozessanlage.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rüakbeziehungen der Ansprüche eine erfinderische Bedeutung haben.

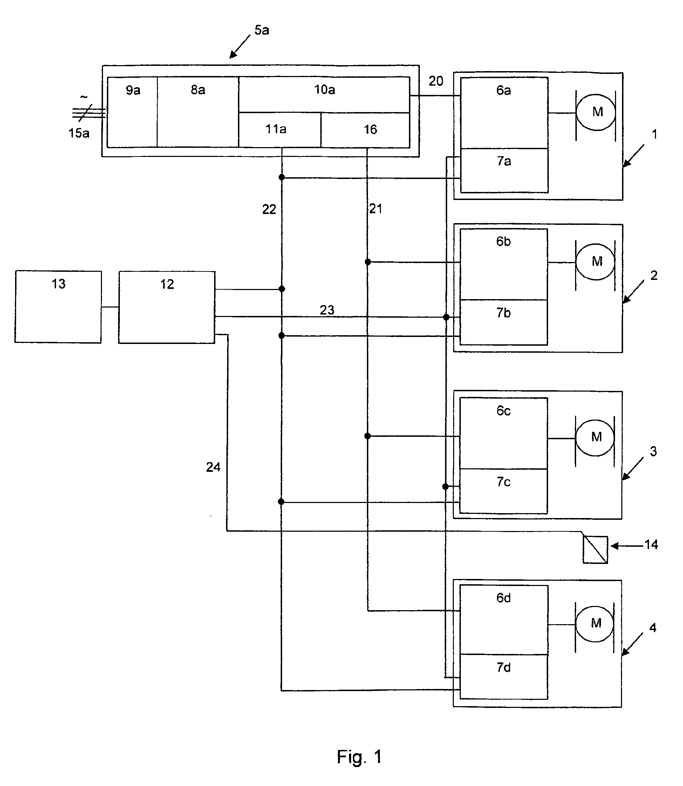

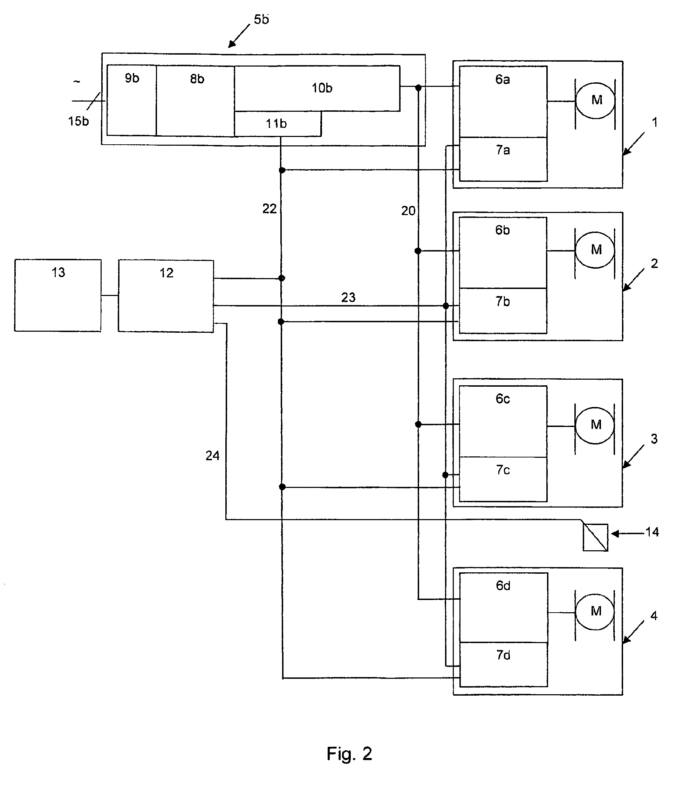

In Fig. 1 und Fig. 2 sind Systemdiagramme zweier Ausführungsformen einer erfindungsgemäßen thermodynamischen Kreisprozessanlage dargestellt. Die jeweils dargestellte thermodynamische Kreisprozessanlage umfasst mehrere elektronische Komponenten, insbesondere einen EC-Kompressor 1, einen EC-Ventilator 2, ein elektronisches Reglerventil 3 und eine EC-Pumpe 4. Der EC-Kompressor 1 ist insbesondere als ein BLDC-Kompressor ausgestaltet. Das Reglerventil 3 ist insbesondere ein elektronisches Expansionsventil. Jede der elektronischen Komponenten weist eine integrierte Leistungselektronik 6a, 6b, 6c, 6d und eine integrierte Steuerungseinheit 7a, 7b, 7c, 7d auf. Die Steuerungseinheiten 7a, 7b, 7c und 7d dienen zur Steuerung der Leistungselektronik 6a, 6b, 6c, 6d und weisen jeweils eine Steuerschnittstelle auf, über die sie an einer externen zentralen Reglereinheit 12 über die Verbindungsleitungen 23 angeschlossen sind. Die Verbindungsleitungen 23 dienen als Steuerleitungen und bestehen insbesondere aus Busleitungen, insbesondere für einen Modbus. Die externe Reglereinheit 12 dient zum Regeln des thermodynamischen Kreisprozesses und steuert übergreifend die verschiedenen elektronischen Komponenten, so dass ein optimaler Wirkungsgrad der Kreisprozessanlage ermöglicht wird. Die Regelung beruht zudem auf Eingangssignalen von externen Sensoren 14, die an die Reglereinheit 12 über die Verbindungsleitung 24 angeschlossen sind. Zudem ist ein optionales Bediengerät 13 an die Reglereinheit 12 angeschlossen, mit dem Betriebsparameter vom Benutzer eingestellt werden können.

Außerdem umfasst die jeweilige thermodynamische Kreisprozessanlage eine zentrale Versorgungselektronik 5a, 5b. Die Versorgungselektronik 5a, 5b ist an eine Wechselspannungsquelle 15a, 15b anschließbar und umfasst insbesondere eine Eingangsstrombegrenzung 8a, 8b, einen EMV-Filter 9a, 9b, eine Zwischenkreisschaltung 10a, 10b und mindestens einen Spannungswandler 11a, 11 b, 16. Der Eingangsstrom der Versorgungselektronik 5a, 5b wird mittels der Eingangsstrombegrenzung 8a, 8b gegen unerwünschte Stromspitzen begrenzt. Die Versorgungselektronik 5a, 5b ist entweder wie in der ersten Ausführungsform gemäß Fig.1 an eine dreiphasige Wechselspannungsquelle 15a, insbesondere mit 400 VAC, oder wie in der zweiten Ausführungsform gemäß Fig. 2 an eine einphasige Wechselspannungsquelle 15b, insbesondere mit 230 VAC, anschließbar. Durch den EMV-Filter 9a, 9b werden unerwünschte elektromagnetische Strahlen gefiltert. Mittels der Zwischenkreisschaltung 10a, 10b und den Spannungswandlern 11a, 16 gemäß der ersten Ausführungsform bzw. dem Spannungswandler 11b gemäß der zweiten Ausführungsform werden drei bzw. zwei verschiedene Versorgungsspannungen für die elektronischen Komponenten 1, 2, 3, 4 zur Verfügung gestellt.

Bei der ersten Ausführungsform gemäß Fig. 1 wird eine erste Versorgungsspannung über die Verbindungsleitung 20 von der Zwischenkreisschaltung 10a der Versorgungselektronik 5a zu dem EC-Kompressor 1, insbesondere zu dessen Leistungselektronik 6a übertragen. Die erste Versorgungsspannung beträgt zwischen 300 V und 600 V, insbesondere 565 V. Eine zweite Versorgungsspannung wird über die Verbindungsleitung 21 von dem Spannungswandler 16 der Versorgungselektronik 5a zu dem EC-Ventilator 2, dem elektronischen Reglerventil 3 und der EC-Pumpe 4, insbesondere zu deren Leistungselektroniken 6b, 6c, 6d übertragen. Die zweite Versorgungsspannung beträgt zwischen 30 V und 400 V und insbesondere 48 V oder 325 V. Eine dritte Versorgungsspannung wird über die Verbindungsleitung 22 von dem Spannungswandler 11 a der Versorgungselektronik 5a zu dem EC-Kompressor 1, dem EC-Ventilator 2, dem elektronischen Reglerventil 3, der EC-Pumpe 4, insbesondere zu deren Steuerungseinheiten 7a, 7b, 7c, 7d, und der zentralen Reglereinheit 12 übertragen. Die dritte Versorgungsspannung beträgt zwischen 3 V und 42 V und insbesondere 5V.

Bei der zweiten Ausführungsform gemäß Fig. 2 wird eine erste Versorgungsspannung über die Verbindungsleitung 20 von der Zwischenkreisschaltung 10b der Versorgungselektronik 5b zu dem EC-Kompressor 1, dem EC-Ventilator 2, dem elektronischen Reglerventil 4 und der EC-Pumpe 4, insbesondere zu deren Leistungselektroniken 6a, 6b, 6c und 6d übertragen. Die erste Versorgungsspannung beträgt zwischen 30 V und 400 V, insbesondere 48 V oder 325 V. Eine zweite Versorgungsspannung wird über die Verbindungsleitung 22 von dem Spannungswandler 11b der Versorgungselektronik 5b zu dem EC-Kompressor 1, dem EC-Ventilator 2, dem Reglerventil 3, der EC-Pumpe 4, insbesondere zu deren Steuerungseinheiten 7a, 7b, 7c 7d, und der zentralen Reglereinheit 12 übertragen. Die zweite Versorgungsspannung beträgt zwischen 3 V und 42 V, insbesondere 5V.

Bei den Versorgungsspannungen handelt es sich um unmodulierte Gleichspannungen, so dass keine kapazitiven Störungen durch die Verbindungsleitungen 20,21, 22 entstehen können.

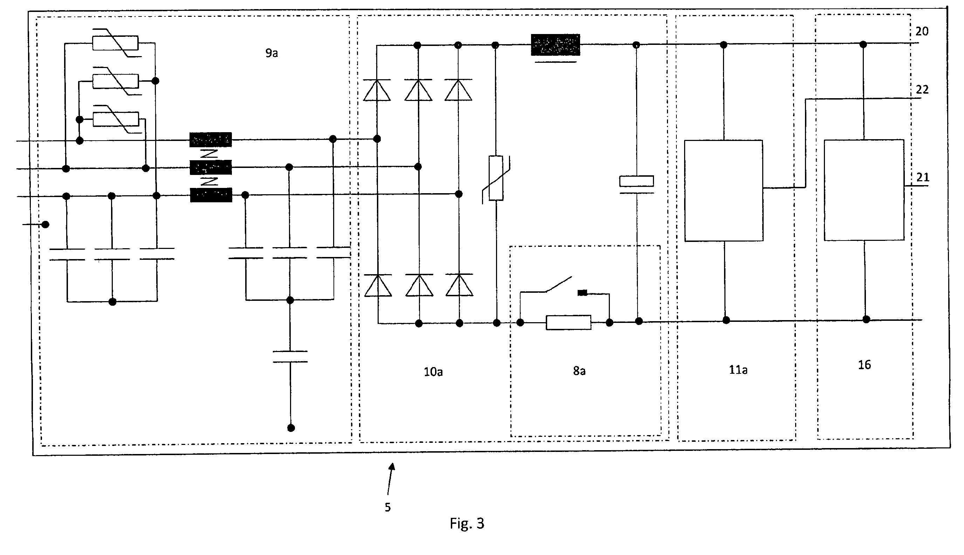

In Fig. 3 ist ein Schaltbild einer beispielhaften Ausführungsform der Versorgungselektronik 5a dargestellt. Die dargestellte Ausführungsform der Versorgungselektronik 5a ist an eine dreiphasige Wechselspannungsquelle 15a mit insbesondere 400 VAC anschließbar. Die Versorgungselektronik 5a begrenzt mittels Eingangsstrombegrenzer 8a Stromspitzen der dreiphasigen Wechselspannung. Zudem werden elektromagnetische Störungen durch EMV-Filter 9a gefiltert. Die dreiphasige Wechselspannung wird mittels eines AC/DC Spannungswandlers 10a zu einer ersten Versorgungsspannung von insbesondere 565 V DC für die Leistungselektronik 6a des EC-Kompressors 1 gewandelt und an einem Anschluss für die Verbindungsleitung 20 bereitgestellt. Über den DC/DC Wandler 16 wird eine zweite Versorgungsspannung von insbesondere 325 V DC für die Leistungselektronik 6b des EC-Ventilators 2, für die Leistungselektronik 6c der EC-Pumpe 3 und für die Leistungselektronik 6d für das Expansionsventil 4 gewandelt und an einem Anschluss für die Verbindungsleitung 21 bereitgestellt. Zudem wird die erste Versorgungsspannung mittels eines DC/DC Spannungswandlers 11 b zu einer dritten Versorgungspannung von insbesondere 5V DC für die Steuerungseinheiten 7a, 7b, 7c, 7d der elektronischen Komponenten, der EC-Kompressor 1, der EC-Ventilator 2, das elektronische Reglerventil 3, die EC-Pumpe 4 und für die Reglereinheit 12 gewandelt und an einem Anschluss für die Verbindungsleitung 22 bereitgestellt.

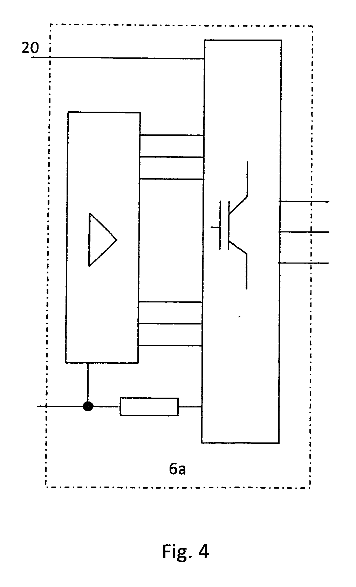

Fig. 4 ist eine schematische Darstellung eines Beispiels für eine integrierte Leistungselektronik 6a, 6b, 6c, 6d für einen Motor. Die Leistungselektronik 6a, 6b, 6c, 6d besteht beispielhaft aus einem Treiber, einer Leistungsendstufe als IGBT Schalter und einem Strommesswiderstand und wird über die Verbindungsleitung 20 mit einer Versorgungsspannung der Versorgungselektronik 5a, 5b versorgt.

Durch die zentrale Versorgungselektronik 5a, 5b werden in jeder der elektronischen Komponenten 1, 2, 3, 4 Bauteile eingespart, so dass eine derartige thermodynamische Kreisprozessanlage kostengünstig hergestellt werden kann. Da jede elektronische Komponenten 1, 2, 3, 4 jeweils ihre eigene Leistungselektronik 6a, 6b, 6c, 6d und die dazugehörige Steuerungseinheit 7a, 7b, 7c, 7d aufweist, ist es möglich, mit derselben Versorgungselektronik 5 andere Leistungsbereiche für die thermodynamische Kreisprozessanlage zu schaffen. Dazu werden die relevanten elektronischen Komponenten 1, 2, 3, 4 durch leistungsstärkere oder leistungsschwächere elektronische Komponenten 1, 2, 3, 4 ausgetauscht. Dabei muss die Versorgungselektronik 5a, 5b jedoch nicht angepasst werden, da die Versorgungsspannungen für die elektronischen Komponenten 1, 2, 3, 4 mit anderen Leistungsbereichen gleich sind und kostengünstig die notwendige Leistung vorgehalten werden kann.

Zudem wird die elektromagnetische Störstrahlung, die durch PWM-Betriebsspannungen auf den Verbindungsleitungen von der Leistungselektronik 6a, 6b, 6c, 6d zu dem Verbraucher der elektronischen Komponenten 1, 2, 3, 4, insbesondere dem Motor des EC-Kompressors 1 bzw. des EC-Ventilators 2, entsteht, stark reduziert, da diese Verbindungsleitungen durch die Integration der Leistungselektronik 6a, 6b, 6c, 6d in den elektronischen Komponenten 1, 2, 3, 4 besonders kurz gestaltet werden können.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Thermodynamische Kreisprozessanlage umfassend eine an einer Wechselspannungsquelle (15a, 15b) anschließbare zentrale Versorgungselektronik (5a, 5b), die einen EMV-Filter (9a, 9b) und eine Eingangsstrombegrenzung (8a, 8b) aufweist, eine zentrale Reglereinheit (12), die mit der zentralen Versorgungselektronik (5a, 5b) verbunden ist, wobei die zentrale Versorgungselektronik (5a, 5b) die für die zentrale Reglereinheit (12) benötigte Versorgungsspannung erzeugt, mindestens zwei Wärmetauscher, einen elektronisch kommutierten Kompressor (1) und eine Kombination von elektronischen Komponenten umfassend elektronisch kommutierte Ventilatoren (2), elektronische Reglerventile (3) und/oder elektronisch kommutierte Pumpen (4),
**dadurch gekennzeichnet, dass** die elektronischen Komponenten (1, 2, 3, 4) jeweils eine integrierte Leistungselektronik (6a, 6b, 6c, 6d) mit einem Treiber, einer Leistungsendstufe als IGBT Schalter und einem Strommesswiderstand aufweisen, die die für die elektronischen Komponenten (1, 2, 3, 4) erforderliche PWM-Betriebsspannung erzeugt, und wobei die zentrale Versorgungselektronik (5a, 5b) mit den einzelnen integrierten Leistungselektroniken (6a, 6b, 6c, 6d) der elektronischen Komponenten (1, 2, 3, 4) verbunden ist und die für die jeweilige Leistungselektronik (6a, 6b, 6c, 6d) erforderlichen Versorgungsspannungen erzeugt, wobei die zentrale Versorgungselektronik (5a, 5b) eine Zwischenkreisschaltung (10) zur Bereitstellung einer ersten Versorgungsspannung und zwei unterschiedliche DC/DC-Spannungswandler (11a, 16) zur Bereitstellung einer zweiten und einer dritten Versorgungsspannung umfasst, und wobei jede elektronische Komponente (1, 2, 3, 4) jeweils eine integrierte Steuerungseinheit (7a, 7b, 7c, 7d) aufweist, und die zentrale Reglereinheit (12) mit den integrierten Steuerungseinheiten (7a, 7b, 7c, 7d) der elektronischen Komponenten (1, 2, 3, 4) verbunden ist.

2. Thermodynamische Kreisprozessanlage nach Anspruch 1 ,
**dadurch gekennzeichnet, dass** die zentrale Versorgungselektronik (5a, 5b) an eine einphasige Wechselspannungsquelle (15b) anschließbar ist.

3. Thermodynamische Kreisprozessanlage nach Anspruch 1,
**dadurch gekennzeichnet, dass** die zentrale Versorgungselektronik (5a, 5b) an eine dreiphasige Wechselspannungsquelle (15a) anschließbar ist.

## Claims

1. Thermodynamic cycle process system, comprising a, to an AC voltage source (15a, 15b) connectable, central supply electronics (5a, 5b) having an EMC filter (9a, 9b) and an input current limiter (8a, 8b), a central regulator unit (12) which is connected to a central supply electronics (5a, 5b), wherein the central supply electronics (5a, 5b) is producing the supply voltage required for the central regulator unit (12), at least two heat exchangers, an electronically commutated compressor (1) and a combination of electronic components comprising electronically commutated fans (2), electronic regulator valves (3) and/or electronically commutated pumps (4),
**characterised in that** the electronic components (1, 2, 3, 4) each have an integrated power electronics (6a, 6b, 6c, 6d) with a driver, a power output stage as an IGBT switch and a current sensing resistor, which produces the PWM operating voltage required for the electronic components (1, 2, 3, 4), and wherein the central supply electronics (5a, 5b) is connected to the individual integrated power electronics (6a, 6b, 6c, 6d) of the electronic components (1, 2, 3, 4) and produces the supply voltages required for the respective power electronics (6a, 6b, 6c, 6d), wherein the central supply electronics (5a, 5b) comprises an intermediate circuit (10) for providing a first supply voltage and two different DC/DC voltage transformers (11a, 16) for providing a second and a third supply voltage, and wherein each electronic component (1, 2, 3, 4) comprises an integrated control unit (7a, 7b, 7c, 7d) and the central regulator unit (12) is connected to the integrated control units (7a, 7b, 7c, 7d) of the electronic components (1, 2, 3, 4).

2. Thermodynamic cycle process system according to claim 1, **characterised in that** the central supply electronics (5a, 5b) is connectable to a single-phase AC voltage source (15b).

3. Thermodynamic cycle process system according to claim 1, **characterised in that** the central supply electronics (5a, 5b) is connectable to a three-phase AC voltage source (15a).

## Revendications

1. Installation de cyclage thermodynamique comportant :
une unité électronique d'alimentation centrale (5a, 5b), qui peut être raccordée à une source de tension alternative (15a, 15b) et qui comprend un filtre CEM (9a, 9b) et une limitation de courant d'entrée (8a, 8b) ; une unité centrale de régulation (12) qui est reliée à l'unité électronique d'alimentation centrale (5a, 5b), dans laquelle l'unité électronique d'alimentation centrale (5a, 5b) génère la tension d'alimentation nécessaire pour l'unité centrale de régulation (12) ; au moins deux échangeurs thermiques ; un compresseur à commutation électronique (1) et une combinaison de composants électroniques comportant des ventilateurs à commutation électronique (2), des vannes de régulation électroniques (3) et/ou des pompes à commutation électronique (4),
**caractérisée en ce que** les composants électroniques (1, 2, 3, 4) comprennent chacun des circuits électroniques de puissance intégrés (6a, 6b, 6c, 6d) avec un circuit d'attaque, un étage final de puissance en tant qu'interrupteur à transistor IGBT et une résistance de mesure de courant qui génère la tension de service MID nécessaire pour les composants électroniques (1, 2, 3, 4), et dans laquelle l'unité électronique d'alimentation centrale (5a, 5b) est reliée aux différents circuits électroniques de puissance intégrés (6a, 6b, 6c, 6d) des composants électroniques (1, 2, 3, 4) et génère les tensions d'alimentation nécessaires pour les circuits électroniques respectifs (6a, 6b, 6c, 5d), dans laquelle l'unité électronique d'alimentation centrale (5a, 5b) comporte un circuit intermédiaire (10) pour fournir une première tension d'alimentation et deux convertisseurs de tension CC/CC différents (11a, 16) pour fournir une deuxième et une troisième tension d'alimentation, et dans laquelle chaque composant électronique (1, 2, 3, 4) comprend respectivement une unité de commande intégrée (7a, 7b, 7c, 7d), et l'unité centrale de régulation (12) est reliée aux unités de commande intégrées (7a, 7b, 7c, 7d) des composants électroniques (1, 2, 3, 4).

2. Installation de cyclage thermodynamique selon la revendication 1,
**caractérisée en ce que** l'unité électronique d'alimentation centrale (5a, 5b) est raccordable à une source de tension alternative monophasée (15b).

3. Installation, de cyclage thermodynamique selon la revendication 1,
**caractérisée en ce que** l'unité électronique d'alimentation centrale (5a, 5b) est raccordable à une source de tension alternative triphasée (15a).
